# EUROPÄISCHE PATENTSCHRIFT

(11) **EP 1 555 454 B1**
(45) Veröffentlichungstag und Bekanntmachung des Hinweises auf die Patenterteilung: **14.04.2010**
(21) Anmeldenummer: 04026370.9
(22) Anmeldetag: 05.11.2004
(51) Int. Cl.: F16F 9/32, F16F 9/54

(54) **Befestigungselement mit multifunktionalem Befestigungsteil**
Fastening element with multi-functional fixing part
Elément de fixation avec une pièce de fixation multifonctionnelle

(30) Priorität: 14.01.2004 DE 102004001933
(43) Veröffentlichungstag der Anmeldung: 20.07.2005
(73) Patentinhaber: ZF Friedrichshafen AG, 88046 Friedrichshafen (DE)
(72) Erfinder: Müller, Michael, 53773 Hennef (DE); Brehm, Stefan, 53773 Hennef (DE); Heinisch, Manfred, 53783 Eitorf (DE)

(56) Entgegenhaltungen:
- DE-A1- 10 208 560
- US-A- 4 740 100

## Beschreibung

Die Erfindung betrifft ein Dämpfungselement zwischen zwei Massen, bestehend aus ein Behälterrohr, einem darin in einem Dämpfungsmedium verschiebbar angeordneten Kolben, einer mit diesem verbundenen Kolbenstange und einem Befestigungsteil zur Verbindung des Dämpfungselements mit einer ersten der beiden gegeneinander schwingungsarm zu haltenden Massen, wobei die Kolbenstange mit einer der Massen verbunden ist.

Dämpfungselemente der vorgenannten Art (z.B. DE 102 08 560 A1) werden beispielsweise an Fahrzeugen zwischen einer ersten Masse, nämlich der von Schwingungen frei zu haltenden Fahrgastzelle und einer zweiten Masse, nämlich den beim Fahrbetrieb unter Schwingungen stehenden Rädern eingesetzt. Dabei ist das Dämpfungselement mittels einer Kolbenstange mit beispielsweise der ersten Masse und mit einem Befestigungsteil mit der zweiten Masse verbunden, wobei die Kolbenstange an einem Kolben angelenkt ist, der in einem mit dem Befestigungsteil verbundenen und mit einem Dämpfungsmedium gefüllten Behälterrohr des Dämpfungselements entsprechend den relativen Schwingungsbewegungen der beiden Massen zueinander oszillierende Bewegungen ausführt.

Bei bestimmten Ausführungsformen ist das Befestigungsteil am Dämpfungselement für eine schwenkbare Befestigung an der zweiten Masse mit einer Gabel ausgestaltet, die an ihren beiden Enden Bohrungen aufweist, um das Dämpfungselement mittels eines durchgeschobenen Bolzens an der zweiten Masse gelenkig zu lagern. Gemäß dem Stand der Technik ist diese Gabel an einem Schaft und dieser wiederum an einem Boden des Behälterrohres angeordnet, wobei dieser Boden eine Scheibe ist, die mit dem Behälterrohr verschweißt ist, um diese abzudichten. Diese Scheibe wird also mit dem Schaft und dieser mit der Gabel verschweißt, um die Funktionen "Abdichten" und "Befestigen" zu sichern.

Der Erfindungsgegenstand der vorliegenden Erfindung sieht vor, die zwei Teile, nämlich den Schaft und die Gabel in einem einzigen Teil zu vereinigen, um ein Herstellungsverfahren zu ermöglichen, welches kostengünstig, aber vor allem für eine Großserienfertigung geeignet ist und anschließend mit dem Boden zu verbinden. Des weiteren wird eine erhöhte Festigkeit des Bauteils erzielt. Die Vorteile dieser Maßnahme liegen auf der Hand: Das Befestigungsteil wird als Schmiedeteil vorgesehen, weil es dadurch die spanende Bearbeitung auf ein Minimum reduziert. Das Gewicht des Befestigungsteils kann reduziert werden, wenn es in seinen Abmessungen den Knick - und Biegeanforderungen angepasst wird. Besonderes Augenmerk ist hier auf den Schaft zu legen, dessen Querschnitt ein Profil aufweisen kann, das beispielsweise ein Doppel-T-Profil ist, welches dem Herstellungsverfahren "Schmieden" keine Schwierigkeiten entgegensetzt.

Die vorliegende Erfindung hat es sich daher zur Aufgabe gemacht, ein Dämpfungselement, bestehend aus einem Behälterrohr, einem darin verschiebbar angeordneten Kolben, einer mit diesem verbundenen Kolbenstange und einem Befestigungsteil auf kostengünstige Weise und mit geringem Montageaufwand durch eine Rationalisierung des Befestigungsteils her zu stellen.

Die Lösung der Aufgabe ist im Kennzeichen des Hauptanspruches beschrieben. Ausgestaltungen sind den Unteransprüchen zu entnehmen.

Anhand mehrerer Zeichnungen wird ein Ausführungsbeispiel eines Befestigungsteils und dessen Anordnung an einem Behälterrohr eines Dämpfungselements erläutert.

Es zeigen:
Figur 1 ein Dämpfungselement, bestehend aus einem Behälterrohr, einer Kolbenstange und einem Befestigungsteil, teils im Schnitt
Figur 2 eine weitere Darstellung des in Figur 1 dargestellten Dämpfungselementes, wobei das Behälterrohr teils geschnitten ist
Figur 3 eine weitere Ausführungsform eines Dämpfungselementes, teils im Schnitt
Figur 4 ein Dämpfungselement, teils im Schnitt
Figur 5 eine weitere Ausführungsform des Befestigungsteils und dessen Anbindung an ein Behälterrohr
Figur 6 eine nicht erfindungsgemäß verschraubte Version eines Befestigungsteiles an einem Boden
Figur 7 und 8 zwei verschiedene Ausführungsformen eines Befestigungsteiles.

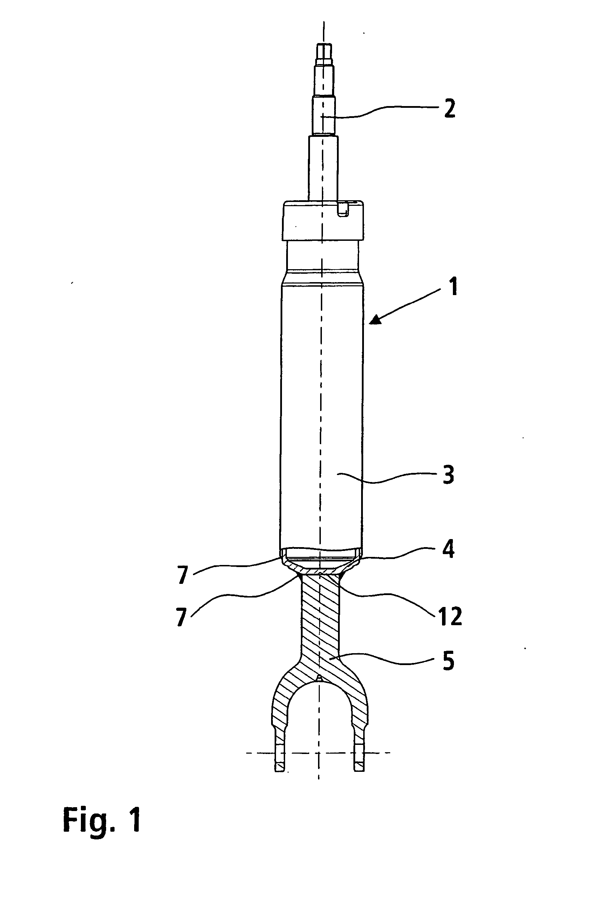

Das in Figur 1 dargestellte Dämpfungselement 1 besteht im wesentlichen aus dem Behälterrohr 3, der Kolbenstange 2 sowie dem Befestigungsteil 5. Das Befestigungsteil 5 ist mit einem Boden 4 verbunden, wobei zwischen dem Boden 4 und dem Befestigungsteil 5 eine Kontaktfläche 12 entsteht, wobei das Befestigungsteil 5 mit dem Boden 4 sowie auch der Boden 4 mit dem Behälterrohr 3 über eine Schweißnaht 7 miteinander verschweißt sind.

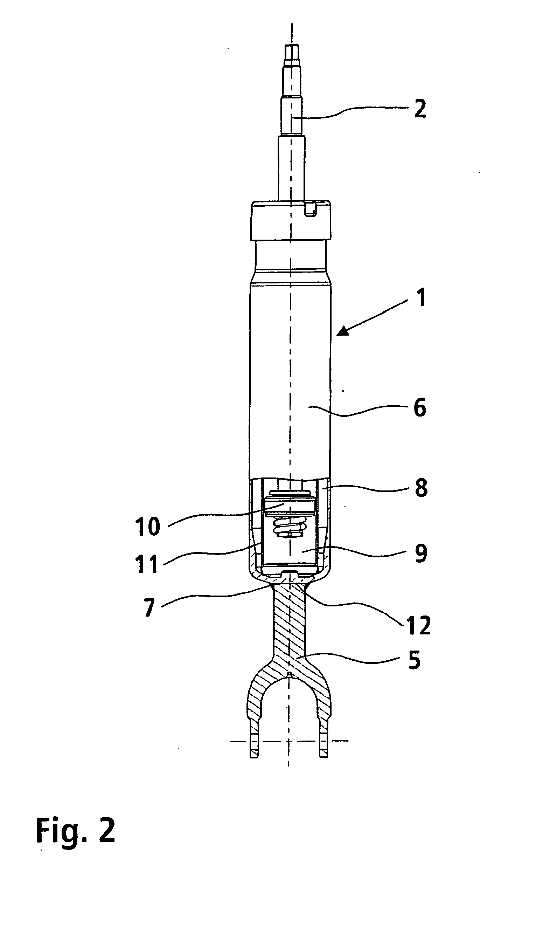

Aus der Figur 2 ist wiederum ein Dämpfungselement 1 zu entnehmen, welches aus einer Kolbenstange 2, einem einteiligen Behälterrohr 6 und dem Befestigungsteil 5 besteht. Innerhalb des Behälterrohres 6 ist ein Ausgleichsraum 8, ein Arbeitsraum 9 sowie ein Kolben 10 zu erkennen. Der Arbeitsraum 9 wird durch ein entsprechendes Zylinderrohr 11 gebildet. Das einteilige Behälterrohr 6 ist an seinem Ende mit dem Befestigungsteil 5 verbunden, wobei sich wiederum eine Kontaktfläche 12 ergibt und an dieser Stelle eine Schweißnaht 7 für eine Verbindung zwischen dem einteiligen Behälterrohr und dem Befestigungsteil 5 vorgesehen ist.

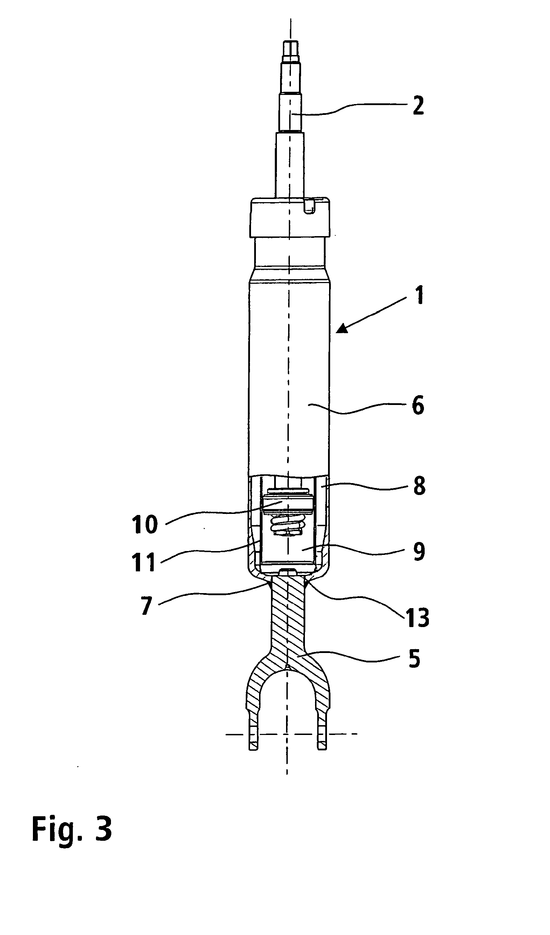

Die Figur 3 zeigt im Prinzip ein Dämpfungselement 1 wie es in Figur 2 bereits dargestellt ist, mit dem Unterschied, dass das Befestigungsteil 5 in einer Bohrung des einteiligen Behälterrohres 6 aufgenommen ist und dabei eine Fügefläche 13 entsteht, so dass zwischen dem Boden des einteiligen Behälterrohres 6 und dem Außenumfang des Schaftes des Befestigungsteiles 5 eine Verbindung über eine Schweißnaht 7 hergestellt wird.

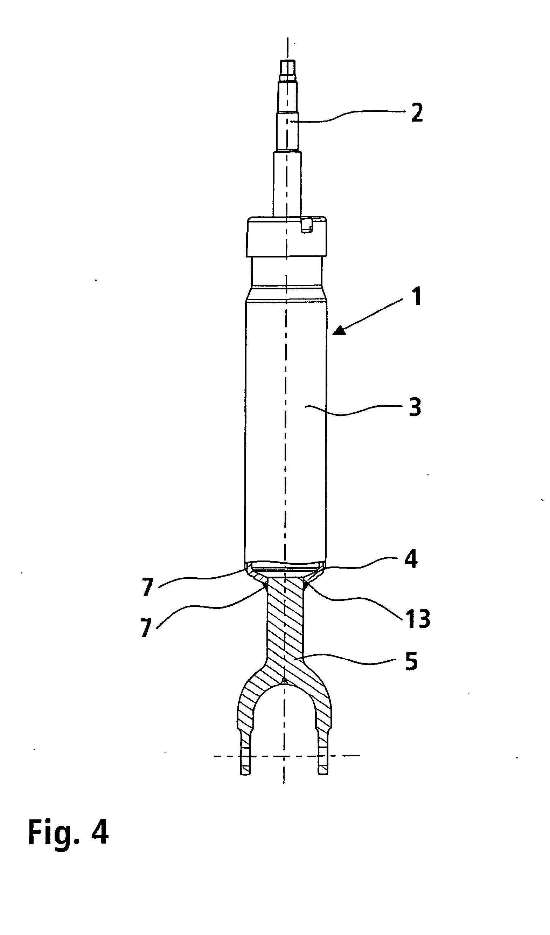

Eine weitere Ausführungsform eines Dämpfungselementes 1 ist in Figur 4 zu entnehmen, wobei zwischen dem Behälterrohr 3 und dem Befestigungsteil 5 ein Boden 4 vorgesehen ist, dabei besitzt der Boden 4 eine Bohrung, wie sie in Figur 3 bereits dargestellt ist, so dass die entstehende Fügefläche 13 herangezogen wird, um sowohl das Befestigungsteil 5 mit dem Boden 4 wie auch der Boden 4 mit dem Behälterrohr 3 über jeweils eine Schweißnaht 7 miteinander verbunden wird.

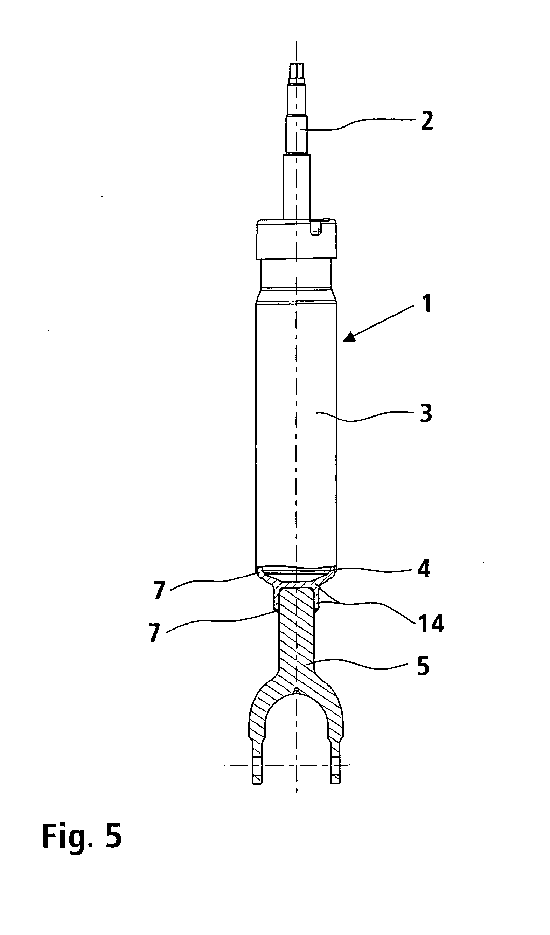

Aus der Figur 5 ist ein Dämpfungselement 1 mit einem Behälterrohr 3 zu entnehmen, wobei der zum Verschließen des Behälterrohres 3 vorgesehene Boden 4 mit einem Napf 14 versehen ist, in den der Schaft des Befestigungsteiles 5 aufgenommen ist. Es wird wiederum das Befestigungsteil 5 mit dem Boden 4 sowie der Boden 4 mit dem Behälterrohr 3 über jeweils eine Schweißnaht 7 fest miteinander verbunden.

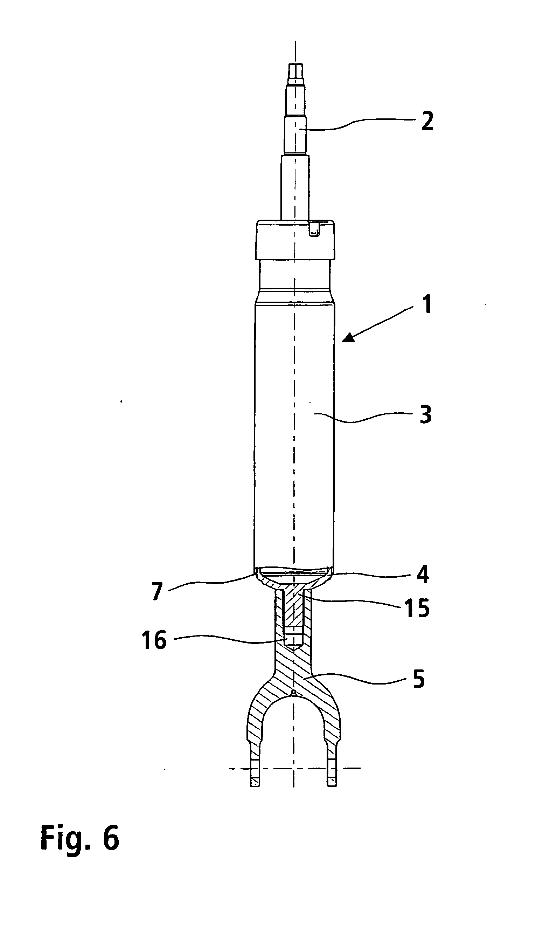

Die Figur 6 zeigt ein Dämpfungselement 1, wobei das Behälterrohr 3 über einen Boden 4 verschlossen wird, der Boden 4 ist dabei mit einem Zapfen 15 versehen, welcher in einer Bohrung 16 des Befestigungsteiles 5 aufgenommen ist. Die Verbindung zwischen dem Zapfen 15 und dem Befestigungsteil 5 erfolgt in diesem Falle über eine Gewindeverbindung, es sind jedoch ebenfalls Verbindungen wie Pressen, Kleben, Schweißen, Fügen, Verstemmen oder Löten ohne weiteres möglich. Der Boden 4 zusammen mit dem Befestigungsteil 5 wird mit dem Behälterrohr 3 über die Schweißnaht 7 fest verbunden.

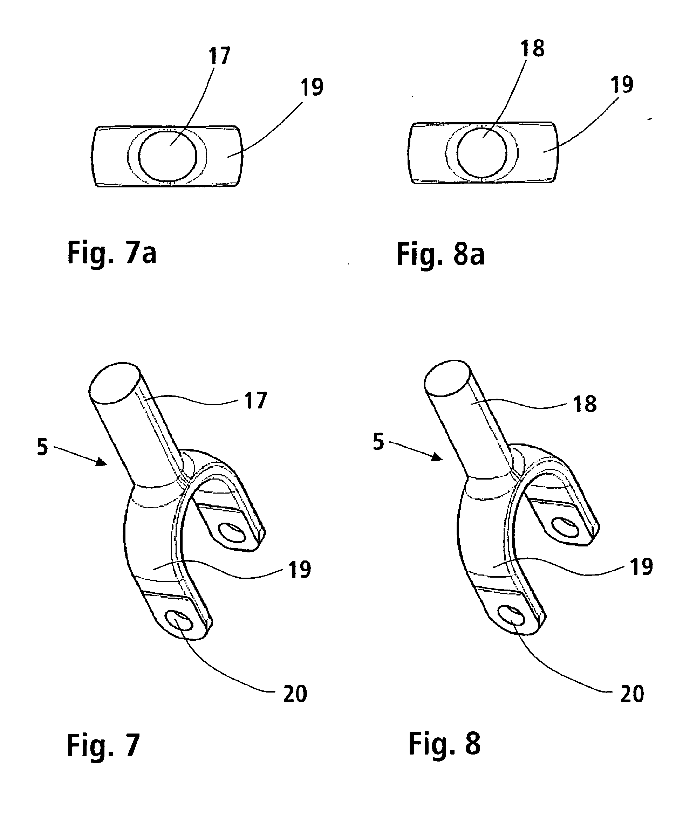

Aus den Figuren 7 bis 7a ist ein Befestigungsteil 5 zu entnehmen, bei dem die Gabel 19 mit Befestigungsbohrungen 20 zur Anbindung des Dämpfungselementes an ein Fahrzeug versehen sind, dabei ist der einteilig mit der Gabel 19 versehene Schaft 17 in seinem Querschnitt oval ausgebildet. Die Figur 7a zeigt dieses in Draufsicht.

Aus den Figuren 8 und 8a ist wiederum ein Befestigungsteil 5 zu entnehmen, bei dem die Gabel 19 ebenfalls einteilig mit dem Schaft 18 ausgebildet ist, dabei besitzt der Schaft 18 einen runden Querschnitt, wie dies aus der Figur 8a zu entnehmen ist.

### Bezugszeichenliste

- 1 -: Dämpfungselement
- 2 -: Kolbenstange
- 3 -: Behälterrohr
- 4 -: Boden
- 5 -: Befestigungsteil
- 6 -: Behälterrohr einteilig
- 7 -: Schweißnaht
- 8 -: Ausgleichsraum
- 9 -: Arbeitsraum
- 10 -: Kolben
- 11 -: Zylinderrohr
- 12 -: Kontaktfläche
- 13 -: Fügefläche
- 14 -: Napf
- 15 -: Zapfen
- 16 -: Bohrung
- 17 -: Schaft oval
- 18 -: Schaft rund
- 19 -: Gabel
- 20 -: Befestigungsbohrung

## Patentansprüche

1. Dämpfungselement zwischen zwei Massen, bestehend aus ein Behälterrohr, einem darin in einem Dämpfungsmedium verschiebbar angeordneten Kolben, einer mit diesem verbundenen Kolbenstange und einem Befestigungsteil zur Verbindung des Dämpfungselements mit einer ersten der beiden gegeneinander schwingungsarm zu haltenden Massen, wobei die Kolbenstange mit der zweiten Masse und das Befestigungsteil mit der ersten Masse verbunden ist,
**dadurch gekennzeichnet,**
**dass** das Befestigungsteil (5) einteilig und als Schmiedeteil ausgebildet ist und ausschließend aus einem Schaft (17, 18) und einer Gabel (19) besteht und mit dem Boden des Behälterrohres (3) verschweißt ist.

2. Dämpfungselement nach Anspruch 1,
**dadurch gekennzeichnet,**
**dass** das Befestigungsteil (5) aus Stahl besteht.

3. Dämpfungselement nach Anspruch 1,
**dadurch gekennzeichnet,**
**dass** der Schaft (17, 18) zur Erhöhung des Widerstandsmoments, zur Gewichtseinsparung, zum Längenausgleich und/oder zur Schaffung eines Freiraumes ein Profil aufweist.

4. Dämpfungselement nach Anspruch 1,
**dadurch gekennzeichnet,**
**dass** das Behälterrohr (3) auf einem Zentrieransatz mit vorzugsweise einem Anschlag an dem Boden (4) zentriert ist.

5. Schwingungsdämpfer nach einem der vorhergehenden Ansprüche,
**dadurch gekennzeichnet,**
**dass** die Verbindungsstelle zwischen dem Befestigungsteil und dem Bodem des Behälterrohres eine Pressverbindung ist, die anschließend gesichert wird.

## Claims

1. Damping element between two masses, comprising a container tube, a piston arranged therein such that it can be displaced in a damping medium, a piston rod connected to said piston and a fixing component to connect the damping element to a first of the two masses to be held with little oscillation in relation to each other, the piston rod being connected to the second mass and the fixing component being connected to the first mass, **characterized in that** the fixing component (5) is designed in one piece and as a forged component and exclusively comprises a stem (17, 18) and a fork (19) and is welded to the base of the container tube (3).

2. Damping element according to Claim 1, **characterized in that** the fixing component (5) consists of steel.

3. Damping element according to Claim 1, **characterized in that** in order to increase the bulk modulus, to save weight, to compensate for length and/or to create a clearance, the stem (17, 18) has a profile.

4. Damping element according to Claim 1, **characterized in that** the container tube (3) is centred on a centring attachment preferably having a stop on the base (4).

5. Shock absorber according to one of the preceding claims, **characterized in that** the connecting point between the fixing component and the base of the container tube is a press connection, which is subsequently secured.

## Revendications

1. Elément d'amortissement entre deux masses, se composant d'un réservoir tubulaire, d'un piston disposé de façon déplaçable dans celui-ci dans un fluide d'amortissement, d'une tige de piston reliée à ce dernier et d'une pièce de fixation pour relier l'élément d'amortissement à une première des deux masses à maintenir sans vibrations l'une par rapport à l'autre, dans lequel la tige de piston est reliée à la deuxième masse et la pièce de fixation est reliée à la première masse, **caractérisé en ce que** la pièce de fixation (5) est formée d'une seule pièce sous la forme d'une pièce forgée et se compose exclusivement d'un axe (17, 18) et d'une fourche (19) et est soudée au fond du récipient tubulaire (3).

2. Elément d'amortissement selon la revendication 1, **caractérisé en ce que** la pièce de fixation (5) est constituée d'acier.

3. Elément d'amortissement selon la revendication 1, **caractérisé en ce que** l'axe (17, 18) présente un profil destiné à augmenter le moment résistant, à économiser du poids, à compenser la longueur et/ou à procurer un espace libre.

4. Elément d'amortissement selon la revendication 1, **caractérisé en ce que** le réservoir tubulaire (3) est centré sur un embout de centrage avec de préférence une butée sur le fond (4).

5. Amortisseur de vibrations selon l'une quelconque des revendications précédentes, **caractérisé en ce que** le point de jonction entre la pièce de fixation et le fond du réservoir tubulaire est un assemblage à ajustement serré, qui est ensuite bloqué.
